(19)

**Europäisches Patentamt**
**European Patent Office**
**Office européen des brevets**

(11) **EP 3 693 917 A1**

(12) **EUROPEAN PATENT APPLICATION**
published in accordance with Art. 153(4) EPC

(43) Date of publication:
**12.08.2020 Bulletin 2020/33**

(21) Application number: **18864049.4**

(22) Date of filing: **04.07.2018**

(51) Int Cl.:
*G06Q 50/06* (2012.01)   *H02J 3/00* (2006.01)
*H02J 3/38* (2006.01)   *H02J 13/00* (2006.01)

(86) International application number:
**PCT/JP2018/025344**

(87) International publication number:
**WO 2019/069518 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2017   JP 2017194210**

(71) Applicant: **Hitachi, Ltd.**
**Tokyo 100-8280 (JP)**

(72) Inventors:
• **ISHII Yoshikazu**
**Tokyo 100-8280 (JP)**

• **MARUYAMA Tatsuya**
**Tokyo 100-8280 (JP)**
• **ABE Masanori**
**Tokyo 100-8280 (JP)**
• **JO Mingyu**
**Tokyo 100-8280 (JP)**
• **AIKAWA Makoto**
**Tokyo 100-8280 (JP)**
• **KUMAGAI Masatoshi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DISTRIBUTED ENERGY RESOURCE MANAGEMENT DEVICE, MANAGEMENT METHOD, AND MANAGEMENT SYSTEM**

(57)    Provided is a technology that is connected to a low-voltage system and can use a distributed energy resource for system operating even when the distributed energy resource is hard for management at short time intervals. A distributed energy resource management system obtains an actual result from an energy resource of a power grid and gives a control command to the energy resource according to a difference from a plan. The distributed energy resource management system includes an input unit which obtains the actual result from a plurality of grouped energy resources, an output unit which provides the control command to the plurality of grouped energy resources, and a calculation unit which gives a control command to the energy resource according to a difference between an actual result from the energy resource of the power grid and the plan. The input unit obtains the actual result measured by all of the plurality of grouped energy resources within a first time period that is a premise when the distributed energy resource management system makes a request for an adjustment power of the power grid, and measures the actual result in the plurality of grouped energy resources at timing different from each other.

*FIG. 1*

**Description**

Technical Field

The present invention relates to a distributed energy resource management system, a management method, and a supervising system for managing distributed energy resources, and more particularly, to a distributed energy resource management system, a management method, and a supervising system which includes controlling and requesting for the distributed energy resource, or reporting an actual result thereto.

Background Art

A power grid is configured by connecting a plurality of generators and loads as energy resources, and is operated so as to always keep balance in supply and demand of power.

Conventionally, as a method of this type for balancing supply and demand of power, there is known a method in which a common management time section is set for a target energy resource, and a command such as demand suppression, demand increase, and power generation is performed for each management time section.

For example, in PTL 1, there is provided with an acquisition unit that acquires an adjustment period for adjusting supply and demand of power, and adjustment power that is electric power to be adjusted during the adjustment period, an adjustment target determining unit that collects a storage battery to be adjusted that is charged or discharged at a predetermined electricity rate during the adjustment period and determines a storage battery to be adjusted from the collected storage batteries on the basis of the adjustment power, and a control unit that charges or discharges the storage battery to be adjusted in the adjustment period, and charges or discharges a storage battery to be adjusted different from the storage battery to be adjusted at an electricity rate different from a predetermined electricity rate. In a method of suppressing the loss of stability of the power grid, which may be caused by simultaneous discharge and charging of storage batteries according to the electricity rate, charging/discharging operations are differently performed on a storage battery to be adjusted and a storage battery not to be adjusted in accordance with a rate setting.

In addition, for example, PTL 2 discloses a method of adjusting supply and demand across time zones using a plurality of managed systems. Herein, in the method, a plurality of energy consumption plans are created or collected for each of the plurality of management targets consuming energy, wherein the plurality of energy consumption plans are characterized by a consumption energy pattern of a predetermined period including a plurality of time zones. One energy consumption plan is determined for each of the plurality of management targets on the basis of the plurality of energy consumption plans of the plurality of management targets. Each of the plurality of management targets is operated and notified on the basis of the one energy consumption plan for each of the plurality of management targets. Therefore, the supply and demand adjustment is easily executed over time zones.

On the other hand, with the introduction of large amounts of renewable energy, there are some regions where it is economically difficult to reserve an online state of generators whose output can be easily changed, such as thermal power. There is a growing need to utilize energy resources that are not always easy to control such as loads and distributed power sources. In response to these trends, expectations for the Demand Response (DR) market and aggregator are increasing around the world, and the adjustment target period and time zone described in the above-mentioned known technology are being shortened, and the accuracy of management will be improved. In Japan, the 30-minute unit is the shortest, but in Europe and the United States, it is 15 minutes, and shorter time units are being considered.

Further, the adjustment period referred to in PTL 1, the time zone referred to in PTL 2, the management time section described at the beginning of the background art, and the like are periods having similar characteristics as follows, and will be referred to as a time period in the invention hereinafter.

Time periods collectively constitute a period such as one day or one year. The time period has a start time and an end time. In many cases, with the exception of leap seconds, a time period has a duration that is equally divided into days or years. When the individual time periods are represented as time period 1, time period 2,..., there is no overlapping time period for time periods i and j except for the time point at the boundary between the start time and the end time. In a case where $i = j + 1$, the end time of the time period j and the start time of the time period i match, and in a case where $i = j - 1$, the start time of the time period j and the end time of the time period i match. A sequence in which n time periods from time period $i = j$ to time period $i = j + n - 1$ are arranged in ascending order of i is referred to as a time period reference period.

In addition, a second time period obtained by subdividing the time period and a third time period obtained by further subdividing the time period may be considered. The period can be represented by a second time period, a third time period, or the like. Therefore, when it is necessary to distinguish these periods, the period is referred to as the period of the first time period reference.

In PTL 1, the adjustment period TP is a first time period, and a so-called divided period corresponds to a second time period. In PTL 2, a predetermined period including a plurality of time zones corresponds to a first time period, and a time period corresponding thereto corresponds to a second time period. The first time period can be designated as the period of the second time period reference.

Citation List

Patent Literature

PTL 1: WO 2015/041010
PTL 2: WO 2015/087528

Summary of Invention

Technical Problem

In a case where small-scale loads, power generation facilities, storage areas, etc. linked to low-voltage systems, which have not been considered promising as control targets in the future introduction of renewable energy, are considered to be used for DR and power generation, transactions and management at short time intervals as described above are troublesome to operate, that is, high costs. It is assumed that a burden on the supply side may not be sufficient for the provision of energy by an automatic control device introduced to suppress the labor.
More specifically, a communication unit is provided for distributed energy resources such as small-scale loads, power generation facilities, and storage batteries related to a low-voltage system to control and make a request, and report an actual result with respect to the management system, and sets up cooperation. However, it is inevitable that the cost burden increases as communication is performed in a short cycle for improving accuracy.
Incidentally, PTL 1 discloses that the charge/discharge rate of the storage battery is set for the same or more subdivided period (second period) as the adjustment target period (time period). Further, in PTL 2, a total power consumption over a plurality of time zones is calculated from an energy consumption plan over a plurality of time zones (time periods) obtained for a plurality of management targets, and a combination of plans satisfying some determination criteria is selected. Although there is a description of how to do this, there is no description about how to devise a time period that is the minimum unit of the plan.
As described above, the conventional technology cannot cope with the above-mentioned problem that the introduction of the method of shortening the energy management time interval limits the available distributed energy resources.
The invention has been made in view of such a problem. Therefore, an object of the invention is to provide a distributed energy resource management system, a management method, and a supervising system that are connected to a low-voltage system and that can use a distributed energy resource for system operation even when the distributed energy resource is difficult to manage at short time intervals.

Solution to Problem

As described above, a distributed energy resource management system according to the invention is configured as "a distributed energy resource management system, which issues a control command to the energy resource of the power grid, includes an input unit which obtains an actual result from a plurality of grouped energy resources, an output unit which sends a control command to the plurality of grouped energy resources, and a calculation unit which sends a control command to the energy resource according to a difference between the actual result from the energy resource of the power grid and a plan. The input unit obtains the actual result measured by the plurality of grouped energy resources within the first time period which is assumed when the distributed energy resource management system makes a request for the adjustment power of the power grid. The timing of measuring the actual result in the plurality of grouped energy resources is different from each other".
Further, the distributed energy resource management method according to the invention is configured as "in a distributed energy resource management system, a plurality of energy resources in a power grid are divided into groups, and one or both of a start time and an end time of a time zone for managing measurement of an actual result in each group are overlapped with other groups".
Further, the distributed energy resource management method according to the invention is configured as "a distributed energy resource management method obtains an actual result from an energy resource of a power grid and gives a control command to the energy resource according to a difference from a plan. The actual result is obtained from a plurality of grouped energy resources, a control command is given to the energy resource to the energy resource according to a difference between an actual result from the energy resource of the power grid and the plan, the actual result measured by the plurality of grouped energy resources is obtained within a first time period that is a premise when making a request for an adjustment power of the power grid, and the actual result is measured in the plurality of grouped energy resources at timing different from each other".

In addition, the distributed energy resource supervising system according to the invention is configured as "a distributed energy resource supervising system which includes an energy resource measurement control device that is provided for each grouped energy resource to measure and control the actual result of the energy resource, an energy resource management system that performs supply and demand control of energy resources in the power grid, and a communication unit provided between the energy resource measurement control device and the energy resource management system. In the energy resource measurement control device, the start time or the end time of the actual measurement in the plurality of energy resource measurement control devices are mutually different. The energy resource management system obtains the actual result measured by all of the plurality of grouped energy resources within a first time period, which is assumed when the power grid issues an adjustment power request, through the communication unit, and sends a control command obtained according to a difference between the measured actual result and the plan to the energy resource measurement control device through the communication unit".

According to the invention, one or both of the start time and the end time are included in the period of the time period with respect to a time period that is a premise when the user of the distributed energy resource makes a request for an adjustment power. At least one of the distributed energy resource groups is managed in another time period that does not have a time period whose start time or end time is matched with the time period.


Advantageous Effects of Invention

According to this invention, it is possible to provide a distributed energy resource management system, and a method that are connected to a low-voltage system and that can use a distributed energy resource for system operation even when the distributed energy resource is difficult to manage at short time intervals.

Specifically, according to the embodiment of the invention, in consideration of the actual result of the distributed energy resource group at the time when the time period for managing the distributed energy resource group ends, correction can be performed on the basis of a difference between the actual result of the previous period and the schedule for the time period, with respect to something that starts immediately after, in a time period for the next distributed energy resource management or a time period that is a premise when a user makes a request for the adjustment power. As a result, even a distributed energy resource that can be managed only in a time period equal to or longer than the time period that is a prerequisite for making a request for an adjustment power can be used for power grid adjustment.


Brief Description of Drawings

[FIG. 1] FIG. 1 is a diagram for describing a time period configuration method for energy resource management.
[FIG. 2] FIG. 2 is a diagram illustrating an example of an algorithm for command distribution to grouped energy resources.
[FIG. 3] FIG. 3 is a diagram illustrating a processing example when an adjustment amount cannot be distributed due to distribution of a correction result to energy resources.
[FIG. 4] FIG. 4 is an explanatory diagram of the entire system including an energy resource management system of the invention.
[FIG. 5] FIG. 5 is a diagram schematically illustrating a relation between a finishing error in adjustment power supply and a factor affecting the finishing error.
[FIG. 6] FIG. 6 is a diagram for describing an embodiment in a case where time periods of groups are shifted at irregular intervals.
[FIG. 7] FIG. 7 is a diagram for describing another embodiment with respect to correction of a time period that is a source of an adjustment power request.
[FIG. 8] FIG. 8 is a diagram for describing a distributed energy resource grouping method.


Description of Embodiments

Hereinafter, embodiments of the invention will be described using the drawings.

[First Embodiment]

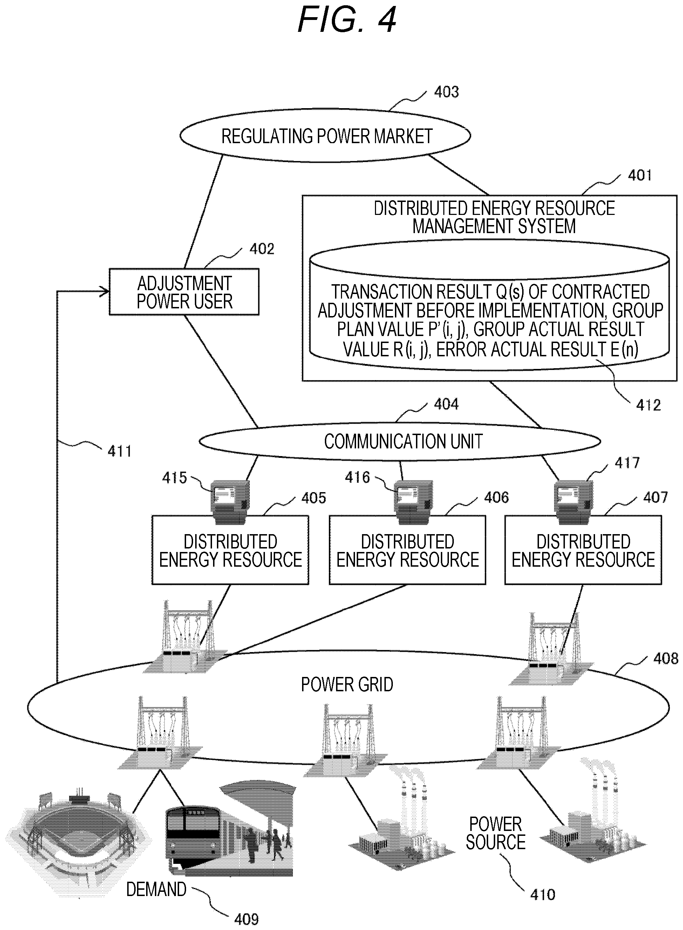

FIG. 4 is an explanatory diagram of the entire system including an energy resource management system of the invention. The system of FIG. 4 includes a power grid 408, a network of a communication unit 404, and a plurality of facilities related to a regulating power market 403. The power grid 408 is connected to a demand device 409, a power source facility 410, and a plurality of distributed energy resources 405, 406, and 407. Further, although a transportation facility and a baseball stadium are illustrated as the demand device 409 in the drawing, various demand devices such as general homes, office buildings, and road lighting are included.

The power source facility 410 also exemplifies a power generation facility having a chimney such as a thermal power plant, but also includes a power supply facility such as a renewable energy power generation or a nuclear power plant. The distributed energy resources 405, 406, and 407 are devices to be managed by the energy resource management system 401 of the invention, and indicates a building air conditioner controlled by a Building Energy Management System (BEMS) or the like, and an electrical facility controlled by a Home Energy Management System (HEMS) corresponding to an Echonet, or the like. Further, the distributed energy resources 405, 406, and 407 are generators and loads. The following description will be given on an assumption on a case in which the load is adjusted as a distributed energy resource. The same assumption can be made for generators.

The invention manages loads by dividing them into a plurality of groups as distributed energy resources, and each group may have loads as various energy resources. Each energy resource should be able to perform operations and collect results at least at intervals equal to or less than the management time length of the group. Thus, within a range of the management time length, energy resources that are able to be operated and collect results at least once can be included in the group. It is a matter of course to include a device which performs a high-frequency control, operation, and result collection (measurement).

In addition, it need not be an individual device such as a storage battery. It suffices if there is some control unit for the load, which is controlled from the energy resource management system 401 of the invention through the communication unit 404 and the like to obtain the result. The control may include, for example, a temperature setting change or an on/off operation by a person.

Although there is only one measurement unit (watt hour meter) as in a general home or building, there are a plurality of units for turning on/off the lighting for each room, turning on/off the air conditioner, and changing the temperature setting. Therefore, the distributed energy resource of the invention can be regarded as a load group corresponding to one power measurement unit.

Through the communication unit 404, it is configured that information can be exchanged with the distributed energy resource management system 401 of the invention. In addition, the energy resource management system 401 of the invention can exchange information with an adjustment power user system 402 through the communication unit 404, receive a command of the adjustment power, notify the result thereof, and bid or participate in bidding of the adjustment power through the regulating power market 403. The adjustment power user system 402 is typically a Distribution System Operator (DSO), a Transmission System Operator (TSO), or a Balancing Group (BG), and is configured to measure information of the power grid using any unit 411, procure the adjustment power in the regulating power market 403, and utilize the information for activating the procured adjustment power. Further, the regulating power market 403 is not limited to a narrow market such as an exchange, but may be means such as bilateral trading or public procurement.

Further, the distributed energy resource management system 401 is usually configured by a computer system, and includes an input unit to obtain a result from the energy resource, an output unit to issue a control command to the energy resource, and a calculation unit to issue a control command to the energy resource according to a difference between the actual result from the energy resource of the power grid and a plan.

In addition, the distributed energy resource management system 401 of the invention includes a database 412 which stores information such as a transaction result Q(s) contracted with the adjustment power user system 402, and a distribution plan of the adjustment power to the distributed energy resources based on the result, actual result, and an error between a plan and the actual result.

Further, the distributed energy resource management system 401 has been described such that the adjustment power is provided using the distributed energy resources 405, 406, and 407. However, it is not necessarily limited to the adjustment power such as DR, and the functions and operations are not different even for selling and buying electricity and negawatts in the real-time market.

The system illustrated in FIG. 4 is, as will be apparent from the following description, configured to serve as "a distributed energy resource supervising system which includes an energy resource measurement control device (415, 416, and 417) that is provided for each grouped energy resource to measure and control the actual result of the energy resource, an energy resource management system 401 that performs supply and demand control of energy resources in the power grid, and a communication unit 404 provided between the energy resource measurement control device (415, 416, and 417) and the energy resource management system 401. The energy resource measurement control devices (415, 416, and 417) synchronize the start time or end time of the actual measurement for the energy resource to be measured. The start time or the end time of the actual measurement in the plurality of energy resource measurement control devices are mutually different. The energy resource management system 401 obtains the actual result measured by all of the plurality of grouped energy resources within a first time period T0, which is assumed when the power grid issues an adjustment power request, through the communication unit 404, and sends a control command obtained according to a difference between the measured actual result and the plan to the energy resource measurement control device (415, 416, and 417) through the communication unit 404".

In addition, the distributed energy resource management system 401 illustrated in FIG. 4 is configured to serve as "a distributed energy resource management system 401, which issues a control command to the energy resource of the power grid, includes an input unit which obtains an actual result from a plurality of grouped energy resources, an output unit which sends a control command to the plurality of grouped energy resources, and a calculation unit which sends a control command to the energy resource according to a difference between the actual result from the energy resource of the power grid and a plan. The input unit obtains the actual result measured by all of the plurality of grouped energy resources within the first time period which is assumed when the distributed energy resource management system makes a request for the adjustment power of the power grid. The timing of measuring the actual result in the plurality of grouped energy resources is different from each other".

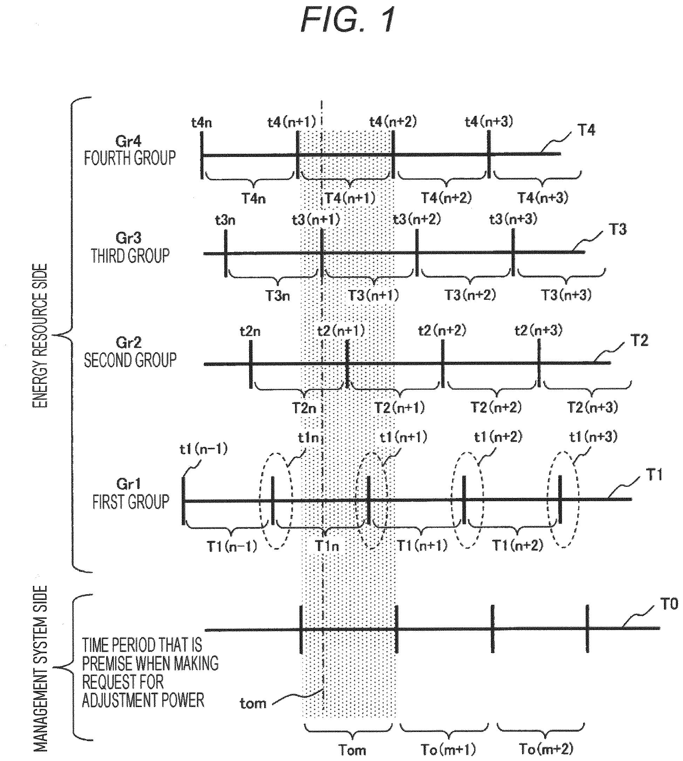

Hereinafter, the distributed energy resource management method performed by the distributed energy resource management system 401 will be described with reference to FIGS. 1 to 3 and FIG. 5.

FIG. 1 is an explanatory diagram of a time period configuration method in the energy resource management method of the invention. The upper part of FIG. 1 illustrates a configuration method of the time period on the distributed energy resource side, and the lower part of FIG. 1 illustrates a concept of the time period on the distributed energy resource management system side.

First, a configuration method of a time period on the distributed energy resource side in the upper part of FIG. 1 will be described. Herein, an example is described in which a plurality of loads, which are distributed energy resources, are divided into four groups and managed. From the top of the drawing, a fourth group Gr4, a third group Gr3, a second group Gr2, and a first group Gr1 are indicated in order, and a plurality of continuous time periods (for example, in the case of the first group Gr1, T1n, T1(n + 1), T1(n + 2), T1(n + 3)...) are set on the time axis (T4, T3, T2, and T1), respectively.

The time periods (T1n, T1(n +1), T1(n + 2), T1(n + 3)...) are separated by a start time or an end time. For example, the time period T1(n - 1) is a time between the start time t1(n - 1) and the end time t1n, the time period T1n is a time between the start time t1n and the end time t1(n + 1), and the time period T1(n + 1) is a time between the start time t(n + 1) and the end time t1(n + 2), and the time period T1(n + 2) is a time between the start time t1(n + 2) and the end time t1(n + 3). While not particularly described, the second group Gr2, the third group Gr3, the fourth group Gr4, the start/end times t2, t3, and t4, and the time periods T2, T3, and T4 have the same relation as the relation between t1 and T1 in the first group Gr1.

In addition, according to FIG. 1, the start/end times t occur in the order of the fourth group Gr4, the third group Gr3, the second group Gr2, and the first group Gr1, and thereafter are repeated in this order. In other words, the start/end times t are repeated in order of t4n ⇒ t3n ⇒ t2n ⇒ t1n ⇒ t4(n + 1) ⇒ t3(n + 1) ⇒ t2(n + 1) ⇒ t1(n + 1) ⇒ t4(n + 2) ⇒ ...

In this drawing, a time period T represents a measurement period of the load amount in the group Gr of the energy resource. Then, for example, it means that, at the time t3(n + 1) of the third group Gr3, the load amount measured in the time period T3n (the time between the start time t3n and the end time t3(n + 1)) is completely measured. This is the same for other times.

On the other hand, the lower part of FIG. 1 illustrates the concept of the time period on the distributed energy resource management system side. The time axis TO is set on the distributed energy resource management system side. The time axis TO represents a time period T0m which is a premise when a user of the distributed energy resource makes a request for the adjustment power or the like.

The distributed energy resource management system is set with the amount of adjustment power required in this time zone which is set for each set time zone (for example, in this example, time periods T0m, T0(m + 1), T0(m + 2), etc.). For example, the required adjustment power at time period T0m is 100 kwh, the required adjustment power at T0(m + 1) is 120 kwh, and the required adjustment power at T0(m + 2) is 130 kwh. The time length of the set time zone in this case is, for example, one hour.

In the illustrated example, the time period TO is indicated at the same timing as the time period of the fourth group Gr4, but, in the case of the example illustrated in FIG. 1, it is possible to receive one measurement result report from each energy resource group during one time period (for example, the time from t4(n + 1) to t4(n + 2)) T0m. In other words, the adjustment power (load amount) measured in the third group can be grasped at time T3(n + 1), the adjustment power (load amount) measured in the second group at time T2(n + 1), the adjustment power (load amount) measured in the first group at time T1(n + 1), and the adjustment power (load amount) measured in the fourth group at time T4(n + 1).

In addition, how the adjustment amount (load amount) in the period T0m is positioned with respect to the target adjustment power request amount can be grasped from the measurement result report from each energy resource group.

Thus, the report can be reflected in the control of the adjustment amount (load amount) in the period T0m as necessary.

According to the concept of FIG. 1, it means that each energy resource is measured in units of one hour, for example, as before, and communicates in units of one hour, and as a distributed energy resource management system, for example, the adjustment amount (load amount) can be grasped at an intermediate time in a more detailed manner, and further can control the adjustment amount (load amount).

Herein, an example is described in which the distributed energy resources are divided into four groups. The invention is characterized in that the time periods of these groups do not start and end at the same timing. In the drawing, the time length of the time period is the same for each of the first to fourth groups and the adjustment power request, and the time periods of the first to fourth groups are indicated to be shifted by 1/4 phase.

In this way, by managing the distributed energy resources in a plurality of groups with shifted time periods, the progress in the middle during the progress of the time period TO can be grasped three times in the example of FIG. 1 regardless of that the management of each energy resource remains the same as the time period T0, which is the premise of the adjustment power request. In addition, as will be described later, the actual result can be reflected in the next plan each time, so that the actual result of procuring the adjustment power can be adjusted without increasing the frequency of managing individual energy resource.

Further, although FIG. 1 illustrates an example including four groups, the number of groups is not necessarily limited to four in order to obtain the above-described effect. More frequent adjustment is possible as the number of groups increases, but adjustment is possible if there is at least one or more groups that are out of phase with the time period which is the premise when making an adjustment power request or the like.

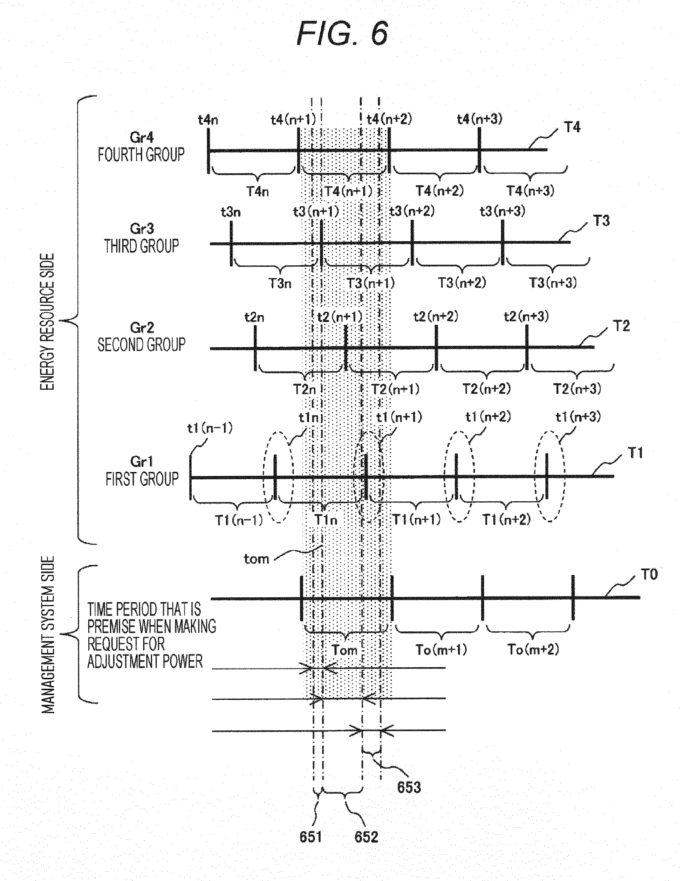

In addition, in the drawing, the time periods of the groups are illustrated such that the phases are shifted at equal intervals, but they do not necessarily have to be at equal intervals. FIG. 6 illustrates such an embodiment. In FIG. 6, the current time t0m and the third group Gr3 at which the time period t3(n + 1) has ended at the time t0m are the same as FIG. 1, but the phase shift 651 between the third group Gr3 and the fourth group Gr4, the phase shift 652 between the third group Gr3 and the second group Gr2 and the phase shift 653 between the second group Gr2 and the first group Gr1 are different from those in the embodiment of FIG. 1. As for the amount of time lag (651, 652, 653), it is sufficient if there is a time lag as much as the distribution plan can be executed.

In addition, the time length of the time period does not need to be common to all groups. For example, if the time lengths of the groups have a large prime number relation, the end time of the time period is hardly matched with the start time of another time period, while the same effect can be obtained. At present, from the viewpoint of difficult advanced control and targeting equipment and facilities that have not been expected as a distributed energy resource until now, the time length setting of each time period is considered to be realistic considering the time length that is the standard for normal economic activities and everyday life. Therefore, it is conceivable to set the time length of the time period to, for example, 43 minutes, 47 minutes, 51 minutes, 53 minutes, 59 minutes, 61 minutes, 67 minutes, 71 minutes, 73 minutes, and 79 minutes.

In addition, the management may be performed in the time period (T1, T2, T3, T4, etc.) that manages each group of distributed energy resources is longer than the time length of the time period T0m, which is a premise when making a request for the adjustment power.

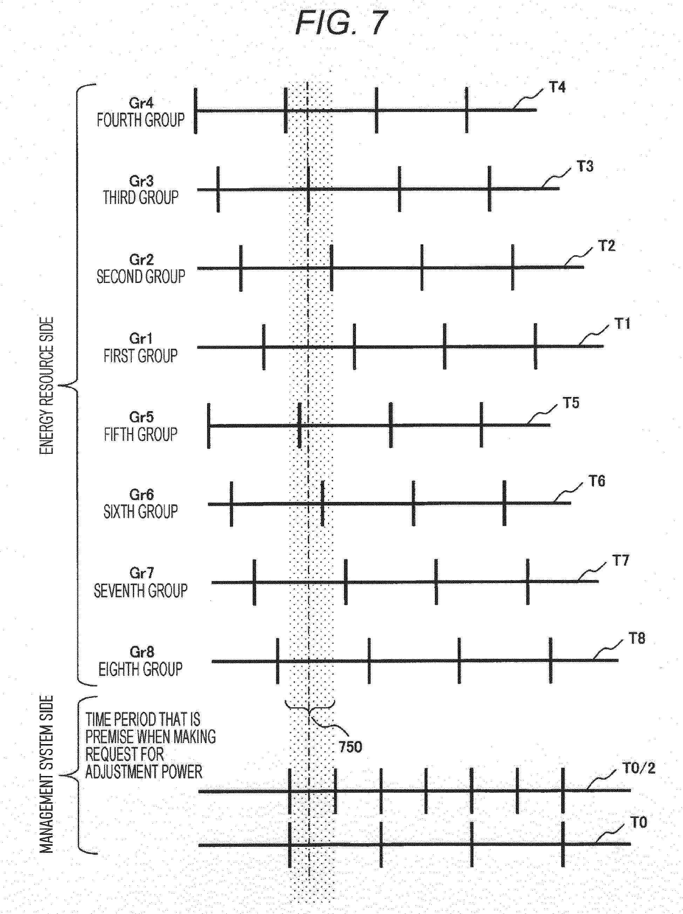

FIG. 7 illustrates an example of such an embodiment in which the latter (T1, T2, T3, T4, etc.) is configured to be twice the former T0. With respect to the time axis TO which is the premise of the adjustment power request illustrated in FIG. 1, it is considered the time axis T0/2 of a new adjustment power request in which the time length of the time period managed is halved, and the time period 750 which is a premise when making a request for the adjustment power request. In such a case, as a new group managed on a new time axis (T5, T6, T7, and T8), groups such as the fifth to eighth groups (Gr5, Gr6, Gr7, and GR8) are introduced, or part of the first to fourth groups (Gr1, Gr2, Gr3, and GR4) is divided into a new group. In this way, the adjustment as a whole can be performed in the same manner as illustrated in FIG. 1 for the adjustment power request on the new time axis T0/2.

With this configuration, there is no need to change the timing of the instruction notification and the result notification and the change of the time length of the time period at least for some resources even with respect to the modification of the time axis TO which is a premise of the adjustment power request.

Further, in a case where there is only one group, the adjustment of the planned amount for the next time period that starts strictly immediately after the end is not made in time, and the actual result will be used to adjust the planned amount for the next time period.

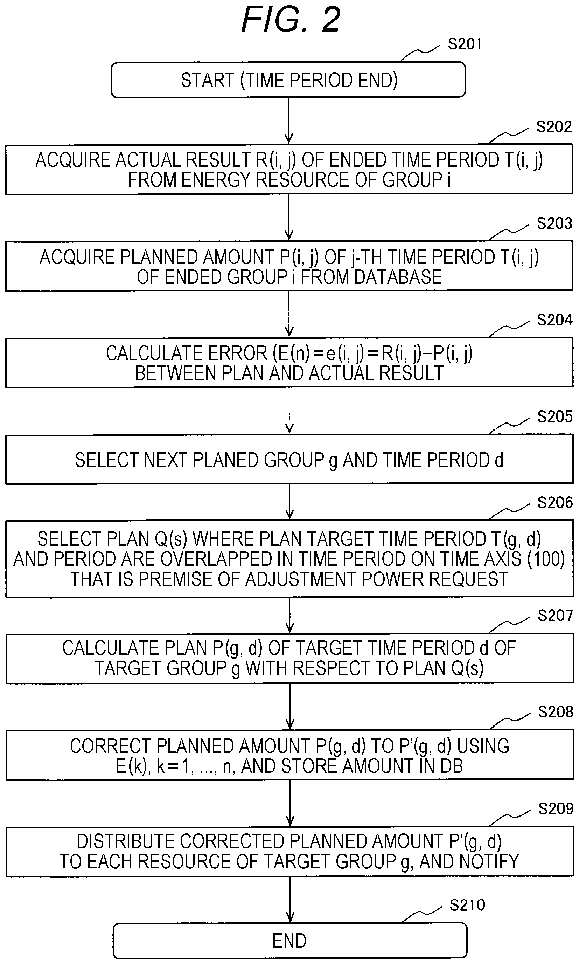

FIG. 2 illustrates an example of an algorithm for command distribution to the grouped energy resources.

In the first processing step S201 of the present algorithm, the start timing of a series of processing is defined, and the execution start is instructed whenever each time period of the energy resource illustrated in FIG. 1 ends. Therefore, in the example of FIG. 1, the start of a series of processing of the subsequent processing steps of FIG. 2 is instructed at timing t4n ⇒ t3n ⇒ t2n ⇒ t1n ⇒ t4(n + 1) ⇒ t3(n + 1) ⇒ t2(n + 1) ⇒ t1(n + 1) ⇒ t4(n + 2) and in this order.

When each end time is detected, first, in processing step S202, the actual result R(i, j) of the end time period t(i, j) is directly obtained from the energy resource group belonging to the i-th group, or from a representative system.

The actual result R(i, j) is a load amount measured in the time zone in the j-th load belonging to the i-th group.

Next, in processing step S203, the planned amount P(i, j) previously executed for the time period T(i, j) is extracted from the database. In processing step S204, an error between the plan and the actual result is calculated. Herein, the planned amount P(i, j) represents the required adjustment power. Further, the planned amount P(i, j) is a value after correction, as described later in the description of processing step S208.

Next, in processing step S205, a group g to be a next plan target and a plan target time period d are selected, and in a process step S206, a plan Q(s) whose period is overlapped with the plan target time period T(g, d) is set in the time period on the time axis TO which is a premise of the adjustment power request. Further, it is assumed that such a plan is determined in a part that is not covered by the invention, such as a day-ahead market, a bilateral trade, or a time-before trade.

In addition, in the case of a group managed in a time period shifted from the time period T0m of the time axis TO as a premise of the adjustment power request as in the first to third groups in FIG. 1, a plurality of plans Q(s) may be found. In processing step S207, the degree of temporal overlap between the plan Q(s) and the target time period T(g, d), the pattern of demand change between the plurality of target plans Q(s), etc. are also taken into account. The allocation amount P(g, d) to the planning target time period T(g, d) is determined.

Next, in processing step S208, the planned distribution amount P(g, d) is corrected. The correction is performed using the past error E(k), but for example, the error related to the latest actual result of the group is acquired, and multiplied with a ratio related to the corresponding plan P(i = g, j) of the error E(k). In addition to this, filter processing using the actual results of the past several time periods of the group (such as weighted average) may be performed, and the results are not limited to the results of the group but may be a result including the past of other groups. Further, the corrected planned value planned in this way is stored in the database for performing the process of step S203 on the actual result at the time (processing step S208).

Finally, in processing step S209, the corrected planned amount P'(g, d) is distributed to each resource of the target group g by a proportional distribution based on the capacity or the like, and the result is notified to each resource. Further, as illustrated in processing step S202, in a case where there is a system that represents the group, the corrected plan value P'(g, d) calculated in processing step S208 may be directly notified there. Further, as for the distribution of the planned amount P'(g, d) to each resource, not only the proportional distribution to the capacity but also the adjustable amount is acquired in advance, and the distribution may be made in proportion to the size. In addition, in a case where the energy resources are supplied with adjustment amounts at different unit prices, the energy resources may be distributed to minimize the cost.

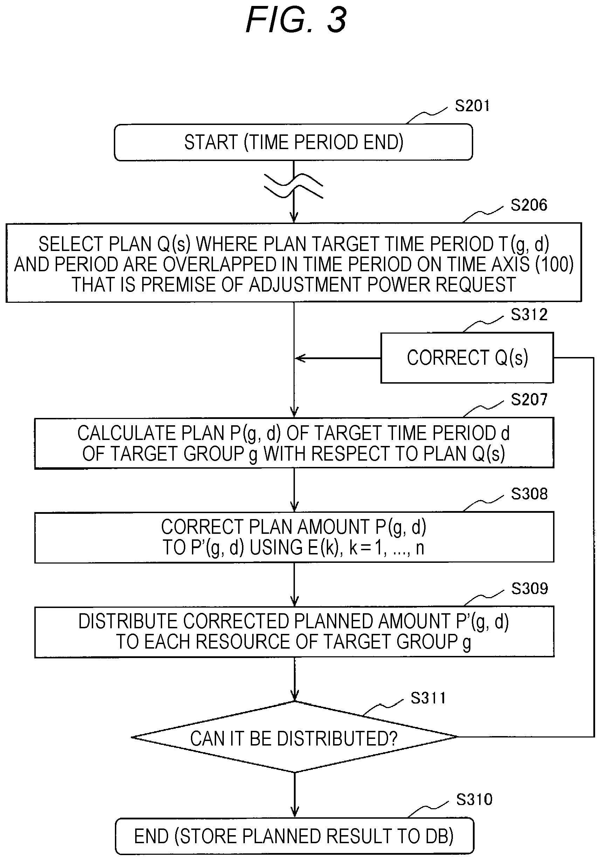

FIG. 3 is an explanatory diagram of a processing example in a case where an adjustment amount cannot be distributed due to distribution of a correction result to distributed energy resources. In the flow of FIG. 3, the processing from processing step S201 to processing step S207 is the same as that in FIG. 2. In FIG. 3, processing steps S308, S309, S310, S311, and S312 are further added.

According to the added part of the processing flow, the adjustment power is distributed to each energy resource in processing step S309, but the distribution is determined in processing step S311. As a result, for example, in a case where a necessary adjustment power cannot be secured by the adjustable amount notified in advance, the process moves to processing step S312, and the plan Q(S) is corrected. Further, there are various methods for correcting the plan Q(s). For example, in a case where a contract is made in the day before market, the shortage can be procured in the day market. In addition, the portion in charge of the group may be reduced so as to be covered by procurement from another subsequent group.

In this case, in processing step S311, the result is necessarily stored in data at the stage when the distribution plan is finally determined. Therefore, unlike the procedure described in FIG. 2, the data is not stored in the database in processing step S308 for correcting the planned amount P(g, d) which is planned in processing step S207.

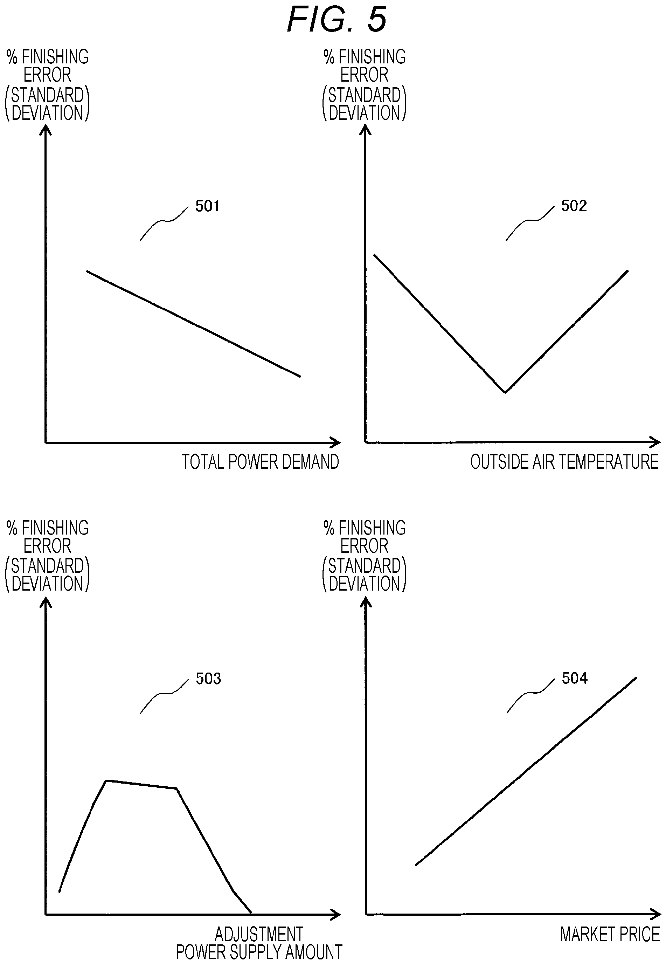

Next, a configuration method of a group of energy resources will be described with reference to FIG. 5.

In a case where there are two or more groups, when calculating the correction P'(g, d) from the plan P(g, d), the latest error E(n) is not from the same group. For example, in the example of FIG. 1, at the current time t0m, the target of the error calculation is the resource of the third group Gr3, but the target of the plan P(g, d) is the second group Gr2. In addition, in the plan of the second group Gr2, the actual result of the fourth group Gr4 and the result of the first group Gr1 indicated by the time period T1n can also be used. In other words, at the current time t0m, the time period currently being implemented in the second group Gr2 is planned and started to be executed before these results are obtained. However, the results are not reflected. Therefore, it is possible to contribute to improvement in accuracy with respect to the adjustment power request by reflecting the results.

In a case where two or more groups are operated in this way, the group in which the time period that triggers the plan ends and the group that is the target of the plan are different. However, as illustrated in FIG. 5, the distribution of the energy resource where the group belongs is determined in advance so that the characteristics of adjustment power supply to a supply adjustment power 503, a weather condition 502, a total demand 501 of power, and a power market price 504 are similar. Even for actual results of other groups, it is preferable to adjust the plan using the latest error tendency.

FIG. 5 schematically illustrates a relation between the finishing error of the adjustment power supply and a factors affecting the finishing error. Herein, as factors affecting the finishing error of the adjustment power supply, there are the outside air temperature 502 (upper right in FIG. 5), the market price 504 (lower right in FIG. 5), the adjustment power supply amount 503 (lower left in FIG. 5), and the total demand 501 of power (upper left of FIG. 5), which are represented by a characteristic indicating a relation with % finishing error. According to this, in the factor of the outside air temperature 502, the % finishing error becomes large after a predetermined temperature. In the factor of the market price 504, the higher the market price, the larger the % finishing error becomes. In the factor of the adjustment power supply amount 503, the % finishing error increases only in a case where the adjustment power supply amount is within a predetermined range. In the factor of the total demand 501 of power, the higher the total demand of power is, the smaller the % finishing error is.

In this way, the effects of the most recent adjustment power supply, such as an excessive supply adjustment amount 503, the weather condition 502, the total demand 501 of system, and fluctuations in the power market price 504 can be successively reflected in the plan regardless of the results of another group, so that the finishing accuracy of the adjustment power supply amount Q(S) can be improved.

Further, such a rearrangement of the group of the energy resources may be set at a time interval much longer than the time period, such as a season or a year, based on the actual result of the individual energy resource up to that time.

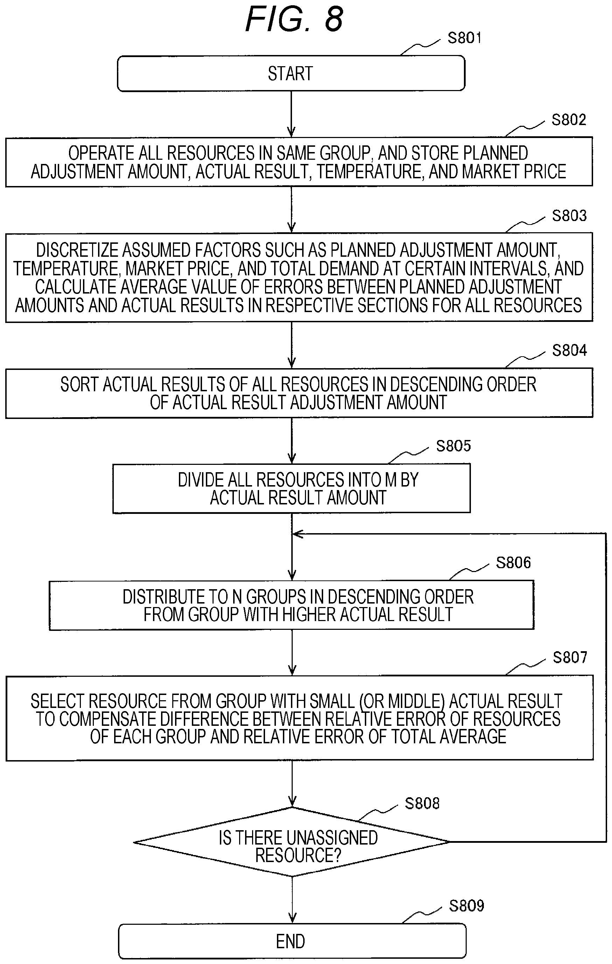

Next, a grouping method of energy resources will be described with reference to FIG. 8. In the first processing step S802 in the processing flow of FIG. 8, first, all resources are operated by one group, and the planned adjustment amount and the actual result thereof are recorded together with air temperature, humidity, market price, total demand, time zone, and day type. Herein, a value standardized for each resource is used as the planned adjustment amount. In the standardization, at the stage that a planned adjustment amount for a group is determined, it is determined based on a distribution ratio used when the planned adjustment amount is distributed to each resource, and a maximum adjustment amount assumed in the group.

Next, in processing step S803, from the distribution of assumed factors such as the planned adjustment amount, air temperature, humidity, market price, total demand, time zone, and day type, these are discretized into certain sections. An average value of errors between the planned adjustment amounts and the actual results in the respective sections is calculated.

Next, in processing step S804, the actual results of all resources are sorted in descending order of the actual result adjustment amount. In processing step S805, the result is divided into M groups (M is at least two or more). At this time, a total actual result adjustment amount of the group with a large actual result adjustment amount and a total actual result adjustment amount of the group that collects the resources with the small adjustment amount are divided, for example, so as to be substantially equal.

In processing step S806, among the M groups divided in this way, the groups in which resources with a high actual result are numbered as Group 1 and Group 2, and the last group is referred to as Group M. Then, among the resources belonging to Group 1, the resources are sequentially allocated to N groups in descending order of actual result.

In processing step S807, a difference is obtained between the result obtained by normalizing the characteristics of the overall average obtained in processing step S803 with the adjustment amount and an average characteristic (an average value of errors with respect to explanatory variables) of resources distributed to each of the N groups. The difference is set in dimension with the total value of the adjustment amounts of the resources distributed to the group. Ideally, assuming a group with the same size and an opposite sign, a resource having an actual result near the ideal one is selected from among Group 2 and subsequent groups, and distributed to the N groups. In this manner, the resources are sequentially distributed to the N groups from the resources having the large adjustment power, and the difference from the average characteristic is compensated by selecting the resources having the small adjustment power, thereby distributing the resources to the groups.

In processing step S808, it is determined whether there is an unassigned resource. If there is an unassigned resource, the process returns to processing step S806, where the unassigned resource having a large adjustment power actual result is determined, and is adjusted to approach the average characteristic. If there is no unassigned resource, the distribution to the group ends (processing step S809).

The group distribution method described in this embodiment is a procedural and simple method similar to a draft system of baseball, but the group may be determined by other methods. For example, all resources are randomly divided into N groups. In this way, the resources are randomly grouped with respect to the respective sections such as planned adjustment amount, air temperature, market price, and total demand obtained in processing steps S802 to S803. Therefore, it is expected that the resources are ideally divided into groups with the same characteristics.

For the results of grouping, the error of each group is checked for each section such as planned adjustment amount, air temperature, market price, and total demand. In a case where an error under the condition is significantly different from other groups, the selection may be performed again, or a process of replacing the resource causing the difference with a resource of another group may be performed. In addition, the same random division is repeated a predetermined number of times, and the variance of errors between groups is evaluated for all combinations of the respective sections such as planned adjustment amount, air temperature, market price, and total demand, and the group division having the smallest variance may be selected.

In addition, in processing step S802, it has been described that all resources are grouped into one group and the actual result with respect to the adjustment command is recorded. However, the grouping may be performed by another method in advance. As another grouping method, for example, it is also conceivable that the resources are distributed so that the average value of the information taken by industry type, floor area, etc. becomes a close value (close to the overall average) to any group from information that can be obtained even without actual power use, such as contracted power, industry type, and floor area of each resource.

In addition, in this way, the group division of the energy resources is not determined such that the characteristics of the adjustment power supply to the adjustment power supply amount, the weather conditions, the total demand, and the power market price are similar in any group. On the contrary, the groups having similar characteristics may be disposed in the same group. If grouping into several stages based on the finishing accuracy of the supply adjustment amount for each factor, and operating in a phase-shifted manner so that all the groups are switched between the time periods that are the base of the adjustment power request, the distribution can be determined so that the finishing accuracy becomes constant in accordance with environmental conditions, market price, adjustment power supply amount (approximately fixed amount), and the like. If the grouping is performed with the finishing accuracy in this way, similar resources should be collected in the same group, and there is also an effect that it is easy to set an incentive according to the characteristics.

Weather conditions, total power demand, weather conditions (outside air temperature, humidity, solar radiation, etc.), and power market prices
have an effect on the finishing of the distribution to resources of adjustment power, but is not the target of the distribution plan itself. Based on this point, assuming that the distribution value of the adjustment power supply planned for time period j of group i is P(i, j), the finishing error (described as an expected value, but also as an X% risk value) e(i, j) is affected by a distribution amount P(i, j), a total demand H(t), a weather condition W(t), a market price M(t), and the like. Herein, the index of the total demand, the weather condition, and the market price is set to t in consideration of the possibility that the time period j and the time zone of these predictions may not completely match. When these relations are expressed by a formula, they are as in Formula (1).
[Math. 1]

$$e(i, j) = f(P(i, j), h(t), W(t), M(t)) \qquad \cdots(1)$$

Such a relation does not necessarily need to be expressed as a function like Formula (1). For example, the relation may be expressed as a parameter of a neural network called a Boltzmann machine having a Gaussian unit or a Rectified Linear unit in the visible layer.

In the time period that is a premise of the adjustment power request, including the time period i (such as T0m in FIG. 1; hereinafter, referred to as the adjustment power request time period), a planned time period jj of a group ii that is expected to end in the future P'(i, j) may also be included to plan to satisfy Formula (2) for the remaining required amount Qr(s) in the adjustment power request time period. Herein, $\alpha$ is an allowable error for the plan. In addition, A(i, s) represents a ratio of the time period T(i, j) of the group i to the adjustment power request time period T(s). As illustrated in FIG. 1, in a case where both the adjustment power and the other groups have the same time length and are evenly out of phase, they have a constant value for each group. In the example of FIG. 1, A(4, j) = 1, A(3, j) = 0.75, A(2, j) = 0.5, and A(1, j) = 0.25 are satisfied for an arbitrary j.
[Math. 2]

$$Qr(s) - \alpha \leqq = A(i, s) \cdot P'(i, j) + \sum_{ii \neq i} A(ii, s) \cdot P'(ii, jj) \leqq Qr(s) + \alpha \qquad \cdots(2)$$

Further, Qr(s) in Formula (2) is an amount obtained by subtracting the required adjustment power Q(s) in the adjustment request time period calculated as in Formula (3) and the actual result R(ii, jj) of the time period T(ii, jj) of each group which ends in the time period.
[Math. 3]

$$Qr(s) = Q(s) - A(i, s) \cdot R(i, j\text{-}1) - \underset{ii \neq i}{\Sigma} A(ii, s) \cdot R(ii, jj\text{-}1) \qquad \cdots (3)$$

In addition, the corrected plan P'(i, j) in consideration of the finishing error e(i, j) can be calculated as in Formula (4).

[Math. 4]

$$P'(i, j) = P(i, j) - e(i, j) + g(E(k)), k = 1 \cdots n) \qquad \cdots (4)$$

[Second Embodiment]

In order to utilize equipment/facility that has not been expected as a distributed energy resource as an adjustment element of the system, it is difficult to perform advanced control. It is necessary to model behaviors at a short time interval such as 1 minute for such resource groups.

As in the distributed energy resource management system of the invention, the resources are divided into a plurality of groups, and in particular, the resources are grouped into N groups so that the characteristics are similar. When the same as the time period of the adjustment power, or a time length of an integer multiple of the time period is expressed as TT, the time length of the time period of all groups is TT. As illustrated in FIG. 1, the time period is configured to deviate at regular intervals, and the actual result for the adjustment power command is doubled by N and recorded.

In this way, it is possible to obtain a time series corresponding to the measured value of the TT/N time unit interval and the control result of the entire distributed energy resource. For the resources of each group, a detailed time model for adjustment power control can be constructed for the entire N groups in spite of only obtaining a command and a result at the time period of the time length TT.

[Third Embodiment]

This embodiment describes a case where the distributed resource management method of the invention is used in a retail balancing group (hereinafter, referred to as retail BG).

Even in the retail BG, the contracted customers are divided into a plurality of customers, and the demand actual result and the demand forecast of the respective customers are managed by shifting the time period as described in FIG. 1 and the accompanying description. In this way, based on the actual result of the group that has ended earlier, the plans of other groups are adjusted, or an organization such as a regional organization or TSO that manages the supply and demand of electricity identifies trends in a difference between consumption submitted in advance as a plan for a management period and an actual result, estimates imbalance which is a difference between the plan and the actual result using the actual result of a group which has ended between the start and end of each time period managed by the regional organization or TSO, procures the adjustment power from a market which has been established until right before the implementation in a shorter time length such as a real-time market. Therefore, it is possible to increase accuracy in power procurement. Reference Signs List

T4 time axis of fourth group
T3 time axis of third group
T2 time axis of second group
T1 time axis of first group
TO time axis as a premise when making a request for adjustment power
401 distributed energy resource management system
402 adjustment power user side
403 regulating power market
404 communication unit
405, 406, 407 distributed energy resource
408 power grid
409 demand
410 power source
412 database for managing plan and actual result of distributed energy resource management system

**Claims**

1. A distributed energy resource management system that obtains an actual result from an energy resource of a power grid and gives a control command to the energy resource according to a difference from a plan, the distributed energy resource management system comprising:

   an input unit which obtains the actual result from a plurality of grouped energy resources;
   an output unit which provides the control command to the plurality of grouped energy resources; and
   a calculation unit which gives a control command to the energy resource according to a difference between an actual result from the energy resource of the power grid and the plan,
   wherein the input unit obtains an actual result measured by the plurality of grouped energy resources within a first time period that is a premise when the distributed energy resource management system makes a request for an adjustment power of the power grid, and measures an actual result in the plurality of grouped energy resources at timing different from each other.

2. The distributed energy resource management system according to claim 1, wherein the calculation unit gives a control command to a second energy resource according to a difference between an actual result obtained from grouped first energy resources and a plan, and the second energy resource is a grouped energy resource which does not report an actual result in the first time period.

3. The distributed energy resource management system according to claim 1 or 2, wherein, when energy resources are grouped, energy resources belonging to a group are determined to be distributed so that characteristics of adjustment power supply are similar.

4. A distributed energy resource management method, wherein a plurality of energy resources in a power grid are divided into groups, and one or both of a start time and an end time of a time zone for managing measurement of an actual result in each group are overlapped with other groups.

5. The distributed energy resource management method according to claim 4, wherein
   the plurality of energy resources are divided into one or more groups, and
   a difference between an actual result and a plan from each group is reflected in a plan of another group.

6. The distributed energy resource management method according to claim 4 or 5, wherein a plurality of energy resources are divided into groups, and at least one or more groups are managed in a time zone shifted from a time zone assumed by a user who uses an energy service supplied by the energy resource.

7. The distributed energy resource management method according to any one of claims 4 to 6, wherein the energy resource is a customer of the power grid, divides a plurality of customers into a plurality of groups, and manages at least one or more customer groups in a time section shifted from a time section set based on a period for managing supply and demand of the power grid.

8. The distributed energy resource management method according to claim 6, wherein a time section for managing groups is set to divide a time section, which is assumed by a user who uses an energy service which is provided by the energy resource, into several equal sections.

9. The distributed energy resource management method according to claim 7, wherein a time section for managing groups is set to divide a time section set based on a period of managing supply and demand of the power grid, into several equal sections.

10. A distributed energy resource management method, comprising:

    obtaining an actual result from an energy resource of a power grid; and
    giving a control command to the energy resource according to a difference from a plan,
    wherein the actual result is obtained from a plurality of grouped energy resources, the control command is given to the energy resource according to a difference between an actual result from the energy resource of the power grid and the plan, the actual result measured by the plurality of grouped energy resources is obtained within a first time period which is a premise when the power grid has made an adjustment power request, and the actual result is measured in the plurality of grouped energy resources at timing different from each other.

11. A distributed energy resource supervising system, comprising:

an energy resource measurement control device that is provided for each grouped energy resource to measure and control an actual result in the energy resource;

an energy resource management system that performs supply and demand control of energy resources in a power grid; and

communication unit that is provided between the energy resource measurement control device and the energy resource management system,

wherein, in the energy resource measurement control device, a start time and an end time to measure the actual result in the plurality of energy resource measurement control devices are different from each other, and

the energy resource management system obtains the actual result measured by the plurality of grouped energy resources within a first time period, which is a premise when the power grid has made an adjustment power request, through the communication unit, and gives a control command obtained according to a difference between the measured actual result and a plan to the energy resource measurement control device.

# FIG. 1

# FIG. 2

START (TIME PERIOD END) — S201

↓

ACQUIRE ACTUAL RESULT R(i, j) OF ENDED TIME PERIOD T(i, j) FROM ENERGY RESOURCE OF GROUP i — S202

↓

ACQUIRE PLANNED AMOUNT P(i, j) OF j-TH TIME PERIOD T(i, j) OF ENDED GROUP i FROM DATABASE — S203

↓

CALCULATE ERROR (E(n) = e(i, j) = R(i, j) − P(i, j) BETWEEN PLAN AND ACTUAL RESULT — S204

↓

SELECT NEXT PLANED GROUP g AND TIME PERIOD d — S205

↓

SELECT PLAN Q(s) WHERE PLAN TARGET TIME PERIOD T(g, d) AND PERIOD ARE OVERLAPPED IN TIME PERIOD ON TIME AXIS (100) THAT IS PREMISE OF ADJUSTMENT POWER REQUEST — S206

↓

CALCULATE PLAN P(g, d) OF TARGET TIME PERIOD d OF TARGET GROUP g WITH RESPECT TO PLAN Q(s) — S207

↓

CORRECT PLANNED AMOUNT P(g, d) TO P'(g, d) USING E(k), k = 1, ..., n, AND STORE AMOUNT IN DB — S208

↓

DISTRIBUTE CORRECTED PLANNED AMOUNT P'(g, d) TO EACH RESOURCE OF TARGET GROUP g, AND NOTIFY — S209

↓

END — S210

# FIG. 3

START (TIME PERIOD END) — S201

SELECT PLAN Q(s) WHERE PLAN TARGET TIME PERIOD T(g, d) AND PERIOD ARE OVERLAPPED IN TIME PERIOD ON TIME AXIS (100) THAT IS PREMISE OF ADJUSTMENT POWER REQUEST — S206

CORRECT Q(s) — S312

CALCULATE PLAN P(g, d) OF TARGET TIME PERIOD d OF TARGET GROUP g WITH RESPECT TO PLAN Q(s) — S207

CORRECT PLAN AMOUNT P(g, d) TO P'(g, d) USING E(k), k = 1, ..., n — S308

DISTRIBUTE CORRECTED PLANNED AMOUNT P'(g, d) TO EACH RESOURCE OF TARGET GROUP g — S309

CAN IT BE DISTRIBUTED? — S311

END (STORE PLANNED RESULT TO DB) — S310

# FIG. 4

403

REGULATING POWER MARKET

401

DISTRIBUTED ENERGY RESOURCE
MANAGEMENT SYSTEM

TRANSACTION RESULT Q(s) OF CONTRACTED
ADJUSTMENT BEFORE IMPLEMENTATION, GROUP
PLAN VALUE P'(i, j), GROUP ACTUAL RESULT
VALUE R(i, j), ERROR ACTUAL RESULT E(n)

412

402

ADJUSTMENT
POWER USER

411

404

COMMUNICATION UNIT

415    416    417

405    406    407

DISTRIBUTED
ENERGY RESOURCE

DISTRIBUTED
ENERGY RESOURCE

DISTRIBUTED
ENERGY RESOURCE

408

POWER GRID

POWER
SOURCE

410

DEMAND

409

# FIG. 5

% FINISHING
ERROR
$\left(\begin{array}{c}\text{STANDARD}\\\text{DEVIATION}\end{array}\right)$

501

TOTAL POWER DEMAND

% FINISHING
ERROR
$\left(\begin{array}{c}\text{STANDARD}\\\text{DEVIATION}\end{array}\right)$

502

OUTSIDE AIR TEMPERATURE

% FINISHING
ERROR
$\left(\begin{array}{c}\text{STANDARD}\\\text{DEVIATION}\end{array}\right)$

503

ADJUSTMENT
POWER SUPPLY AMOUNT

% FINISHING
ERROR
$\left(\begin{array}{c}\text{STANDARD}\\\text{DEVIATION}\end{array}\right)$

504

MARKET PRICE

EP 3 693 917 A1

# FIG. 6

ENERGY RESOURCE SIDE

Gr4 FOURTH GROUP — t4n, t4(n+1), t4(n+2), t4(n+3) — T4
T4n, T4(n+1), T4(n+2), T4(n+3)

Gr3 THIRD GROUP — t3n, t3(n+1), t3(n+2), t3(n+3) — T3
T3n, T3(n+1), T3(n+2), T3(n+3)

Gr2 SECOND GROUP — t2n, t2(n+1), t2(n+2), t2(n+3) — T2
T2n, T2(n+1), T2(n+2), T2(n+3)

Gr1 FIRST GROUP — t1(n−1), t1n, t1(n+1), t1(n+2), t1(n+3) — T1
T1(n−1), T1n, T1(n+1), T1(n+2)

tom

MANAGEMENT SYSTEM SIDE

TIME PERIOD THAT IS PREMISE WHEN MAKING REQUEST FOR ADJUSTMENT POWER — T0
Tom, To(m+1), To(m+2)

651  652  653

19

# FIG. 7

ENERGY RESOURCE SIDE

Gr4
FOURTH GROUP — T4

Gr3
THIRD GROUP — T3

Gr2
SECOND GROUP — T2

Gr1
FIRST GROUP — T1

Gr5
FIFTH GROUP — T5

Gr6
SIXTH GROUP — T6

Gr7
SEVENTH GROUP — T7

Gr8
EIGHTH GROUP — T8

MANAGEMENT SYSTEM SIDE

TIME PERIOD THAT IS
PREMISE WHEN MAKING
REQUEST FOR
ADJUSTMENT POWER

750

T0/2

T0

20

# FIG. 8

```
                                              S801
        ┌─────────────────────────────────────┐
        │                START                │
        └─────────────────────────────────────┘
                          │
                          ▼                   S802
┌───────────────────────────────────────────────────────┐
│   OPERATE ALL RESOURCES IN SAME GROUP, AND STORE PLANNED │
│ ADJUSTMENT AMOUNT, ACTUAL RESULT, TEMPERATURE, AND MARKET PRICE │
└───────────────────────────────────────────────────────┘
                          │
                          ▼                   S803
┌───────────────────────────────────────────────────────┐
│ DISCRETIZE ASSUMED FACTORS SUCH AS PLANNED ADJUSTMENT AMOUNT, │
│ TEMPERATURE, MARKET PRICE, AND TOTAL DEMAND AT CERTAIN INTERVALS, AND │
│ CALCULATE AVERAGE VALUE OF ERRORS BETWEEN PLANNED ADJUSTMENT │
│ AMOUNTS AND ACTUAL RESULTS IN RESPECTIVE SECTIONS FOR ALL RESOURCES │
└───────────────────────────────────────────────────────┘
                          │
                          ▼                   S804
┌───────────────────────────────────────────────────────┐
│   SORT ACTUAL RESULTS OF ALL RESOURCES IN DESCENDING ORDER │
│          OF ACTUAL RESULT ADJUSTMENT AMOUNT             │
└───────────────────────────────────────────────────────┘
                          │
                          ▼                   S805
        ┌─────────────────────────────────────┐
        │      DIVIDE ALL RESOURCES INTO M BY  │
        │          ACTUAL RESULT AMOUNT        │
        └─────────────────────────────────────┘
                          │
                          ▼                   S806
        ┌─────────────────────────────────────┐
        │  DISTRIBUTE TO N GROUPS IN DESCENDING ORDER │
        │     FROM GROUP WITH HIGHER ACTUAL RESULT    │
        └─────────────────────────────────────┘
                          │
                          ▼                   S807
┌───────────────────────────────────────────────────────┐
│ SELECT RESOURCE FROM GROUP WITH SMALL (OR MIDDLE) ACTUAL RESULT │
│ TO COMPENSATE DIFFERENCE BETWEEN RELATIVE ERROR OF RESOURCES │
│   OF EACH GROUP AND RELATIVE ERROR OF TOTAL AVERAGE     │
└───────────────────────────────────────────────────────┘
                          │
                          ▼                   S808
                    ╱─────────────╲
                   ╱  IS THERE UNASSIGNED ╲
                   ╲    RESOURCE?         ╱
                    ╲─────────────╱
                          │
                          ▼                   S809
        ┌─────────────────────────────────────┐
        │                 END                 │
        └─────────────────────────────────────┘
```

**INTERNATIONAL SEARCH REPORT**

| | International application No. |
|---|---|
| | PCT/JP2018/025344 |

A. CLASSIFICATION OF SUBJECT MATTER
Int.Cl. G06Q50/06(2012.01)i, H02J3/00(2006.01)i, H02J3/38(2006.01)i, H02J13/00(2006.01)i

According to International Patent Classification (IPC) or to both national classification and IPC

B. FIELDS SEARCHED

Minimum documentation searched (classification system followed by classification symbols)
Int.Cl. G06Q50/06, H02J3/00, H02J3/38, H02J13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-261050 A (NTT DATA CORPORATION) 22 September 2005, paragraphs [0001], [0216]-[0283] (Family: none) | 1, 3-11<br>2 |
| Y<br>A | JP 2014-157386 A (MITSUBISHI ELECTRIC CORPORATION) 28 August 2014, paragraphs [0039], [0067] (Family: none) | 1, 3-11<br>2 |
| A | JP 2014-149569 A (FUJITSU LIMITED) 21 August 2014, entire text, all drawings (Family: none) | 1-11 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.09.2018 | 11.09.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015041010 A

- WO 2015087528 A